(19) Europäisches Patentamt
European Patent Office
Office européen des brevets

(11) **EP 4 475 600 A1**

(12) **EUROPEAN PATENT APPLICATION**

(43) Date of publication:
**11.12.2024  Bulletin 2024/50**

(21) Application number: **23190194.3**

(22) Date of filing: **08.08.2023**

(51) International Patent Classification (IPC):
**H04W 48/20** $^{(2009.01)}$

(52) Cooperative Patent Classification (CPC):
**H04W 48/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.06.2023  TW 112121327**

(71) Applicant: **Wistron Corporation
New Taipei City 22181 (TW)**

(72) Inventor: **HUANG, Yuan Fu
New Taipei City 22181 (TW)**

(74) Representative: **Becker, Eberhard
Becker Kurig & Partner
Patentanwälte mbB
Bavariastraße 7
80336 München (DE)**

Remarks:
Amended claims in accordance with Rule 137(2) EPC.

(54) **CELL SELECTION METHOD**

(57)  Embodiments of the disclosure provides a cell selection method, including: during performing a cell selection operation on multiple reference base stations, obtaining (S212) a signal indicator and a network congestion indicator corresponding to each of the reference base stations; and selecting (S214) a serving base station from the reference base stations based on the signal indicator and the network congestion indicator corresponding to the each of the reference base stations.

FIG. 2

**Description**

BACKGROUND

Technical Field

This disclosure relates to a wireless communication technology, in particular to a cell selection method.

Description of Related Art

A terminal device (such as a cell phone) will try to connect to the network after booting. During the connection process, the signal information of the nearby detectable cells (or base stations) is measured and the more suitable cells are selected for connection. This process is called cell selection.

After connecting to the network, the terminal device will continue to observe the network status in order to perform cell selection again in a timely manner, and this process is called cell reselection.

According to the relevant communication standards (e.g., 3GPP TS 38.304), it is known that during cell selection or cell reselection, the terminal device selects a suitable cell based on the signal strength (e.g., SrxLev parameter as defined in 3GPP TS 38.304) and signal quality (e.g., Squal parameter as defined in 3GPP TS 38.304), as well as the matching frequency priorities or radio access technology (RAT_priorities) for the connection.

However, although this selection method allows the terminal device to select a serving cell with high signal strength and good signal quality, the terminal device may not be able to experience good quality of service.

For example, when a cell has experienced network congestion for some reason (e.g., serving too many terminals), it may allow the terminals it serves to experience lower data transfer speeds despite high signal strength and good signal quality.

SUMMARY

The disclosure provides a cell selection method, capable of solving the above technical problems.

An embodiment of the disclosure provides a cell selection method adapted to a terminal device. The method includes the following. During performing a cell selection operation on multiple reference base stations, a signal indicator and a network congestion indicator corresponding to each of the reference base stations are obtained. A serving base station is selected from the reference base stations based on the signal indicator and the network congestion indicator corresponding to the each of the reference base stations.

An embodiment of the disclosure provides a cell selection method adapted to a base station. The method includes the following. A signal indicator and a network congestion indicator corresponding to the base station are provided to a terminal device. The signal indicator and the network congestion indicator corresponding to the base station allow the terminal device to perform a cell selection operation.

To make the aforementioned more comprehensive, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 is a schematic diagram of a communication system according to one embodiment of the disclosure.
FIG. 2 is a flow chart of a cell selection method according to one embodiment of the disclosure.

DESCRIPTION OF THE EMBODIMENTS

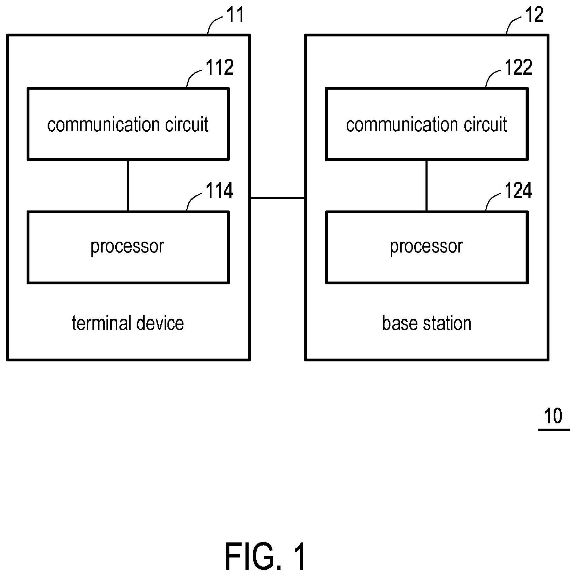

FIG. 1 is a schematic diagram of a communication system according to one embodiment of the disclosure. In FIG. 1, a communication system 10 includes a terminal device 11 and a base station 12.

In different embodiments, the terminal device 11 may represent a user equipment (UE), a mobile station, an advanced mobile station (AMS), or a wireless terminal communication device. In addition, the terminal device 11 may be a mobile phone, a smart phone, a personal computer (PC), a notebook PC, a netbook PC, a tablet PC, a television, a set-top box, a wireless data modem, a game console, a portable device, or a portable multimedia player, etc.

In different embodiments, the base station 12 is, for example, wireless network access point, enhanced node B (eNodeB), advanced base station (ABS), macrocell base station, pico-cell base station or remote radio head (RRH), gNodeB (gNB), etc., but not limited thereto.

As shown in FIG. 1, the terminal device 11 includes a communication circuit 112 and a processor 114. In one embodiment, the communication circuit 112 may provide wireless access to the terminal device 11 by including at least a transmitter circuit, a receiver circuit, an analog-to-digital (A/D) converter, a digital-to-analog (D/A) converter, a low noise amplifier (LNA), a mixer, a filter, a matching circuit, a transmission line, a power amplifier (PA), one or more antenna units, and local storage media.

In some embodiments, the communication circuit 112 may be a component such as a protocol unit, which may support various wireless network communication protocols such as WiFi HaLow. In other embodiments, the communication circuit 112 may also support global system for mobile communication (GSM), personal handy-phone system (PHS), code division multiple access (CDMA) system, wireless fidelity (Wi-Fi) system or worldwide interoperability for microwave access (WiMAX) signal transmission, but not limited thereto.

In addition, the processor 114 is coupled to the communication circuit 112, and may be a general-purpose processor, a special-purpose processor, a conventional processor, a digital signal processor, multiple microprocessors, one or more microprocessors incorporating digital signal processor cores, controllers, microcontrollers, application specific integrated circuit (ASIC), field programmable gate array (FPGAs), any other kind of integrated circuits, state machines, advanced RISC machine (ARM)-based processors, and similar products.

As shown in FIG. 1, the base station 12 includes a communication circuit 122 and a processor 124, and individual possible implementations thereof may be referred to the communication circuit 112 and the processor 114 without further description in the following.

In the embodiment of the disclosure, the terminal device 11 and the base station 12 may cooperate to implement a cell selection method proposed by the disclosure, the details of which are described as follows.

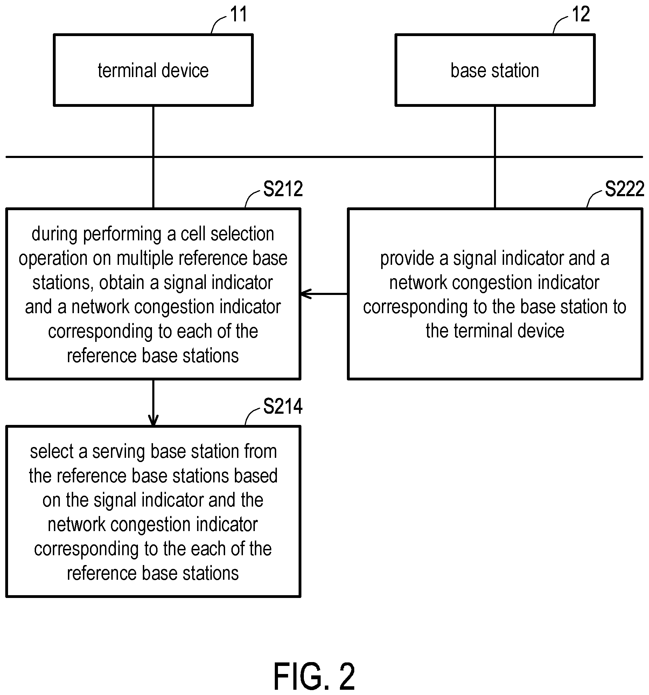

FIG. 2 is a flow chart of a cell selection method according to one embodiment of the disclosure. The method of this embodiment may be performed by the terminal device 11 and the base station 12 in FIG. 1, and the details of steps in FIG. 2 are illustrated below with the components shown in FIG. 1.

In step S222, the base station 12 provides a signal indicator and a network congestion indicator corresponding to the base station 12 to the terminal device 11.

In one embodiment, the signal indicator corresponding to the base station 12 includes signal strength (such as SrxLev parameter) and signal quality (such as Squal parameter). In addition, the network congestion indicator corresponding to the base station 12 may include a user network throughput determined by the base station 12. In one embodiment, the user network throughput of the base station 12 is, for example, a user-perceived IP throughput determined by the base station 12, but not limited thereto.

In different embodiments, the base station 12 may, for example, use a statistical value (such as an average value) of the user-perceived IP throughput of all terminal devices it serves as a corresponding user network throughput, but not limited thereto.

In a first embodiment, the user network throughput of the base station 12 is, for example, a current user network throughput determined by the base station 12. For example, assuming that the user network throughput determined by the base station 12 at a $t^{th}$ time point (t is a time index) is a certain value, the base station 12 may use this value as the current user network throughput (expressed as $T_t$), and provide $T_t$ to the terminal device 11.

In a second embodiment, the user network throughput of the base station 12 is, for example, a future user network throughput predicted by the base station 12. For example, assuming that a current time point is the $t^{th}$ time point, the future user network throughput is, for example, a user network throughput corresponding to a later time point. For the sake of illustration, the following assumptions about the future user network throughput corresponding to a $(t+1)^{th}$ time point are made for illustrative purposes only and are not intended to limit possible implementations of the disclosure.

In the second embodiment, the base station 12 may feed at least one historical user network throughput into a predictive model (expressed as M). The predictive model M may predict the future user network throughput (expressed as $T'_{t+1}$) in response to the historical user network throughput.

In a first variation of the second embodiment, the predictive model M may include a long short-term memory model. In this case, the future user network throughput $T'_{t+1}$ may be expressed as:

$$T'_{t+1} = f_\lambda(T_{t-L}, ..., T_t) \qquad (1)$$

, where $T_{t-L}$, ..., $T_t$ is the historical user network throughput, L is a time window, and $f_\lambda(\cdot)$ is the long short-term memory model.

It can be seen from formula (1) that the predictive model M may predict a corresponding network throughput as a future user network throughput $T'_{t+1}$ in response to L+1 historical user network throughput (i.e., $T_{t-L}$, ..., $T_t$), but not limited thereto.

In a second variation of the second embodiment, the predictive model M may include a regression model. In this case, the future user network throughput $T'_{t+1}$ can be expressed as:

$$T'_{t+1} = c_t + \sum_{i=0}^{L} \varphi_i T_{t-i} + \varepsilon_t \qquad (2)$$

, where $c_t$ is a random error value, $\varepsilon_t$ is a constant, and $\varphi_i$ is a regression coefficient. In one embodiment, $c_t$ is, for example, a Gaussian random variable with an average value of 0 and a standard deviation of σ, but not limited thereto.

Correspondingly, in step S212, during performing a cell selection operation on multiple reference base stations (including, for example, the base station 12), the terminal device 11 obtains the signal indicator and the network congestion indicator corresponding to each of the reference base stations.

In the embodiment of the disclosure, the reference base stations are, for example, base stations for managing a cell to which the terminal device 11 currently belongs (which is, for example, a current serving base station of the terminal device 11), or base stations for managing a cell adjacent to terminal device 11, but not limited thereto.

In this case, the signal indicator corresponding to the each of the reference base stations includes signal strength (such as SrxLev parameter) and signal quality (such as Squal parameter), and the network congestion indicator corresponding to the each of the reference base stations includes the user network throughput determined by the each of the reference base stations (such as the current user network throughput $T_t$ in the first embodiment and/or the future user network throughput $T'_{t+1}$ in the second embodiment.

In one embodiment, the terminal device 11 in an idle state (such as RRC_IDLE state) or inactive state (such as RRC_INACTIVE state) may obtain information about intra-frequency cells, inter-frequency cells, inter-RAT cells, etc. from the current serving base station and perform the cell selection operation accordingly.

In the embodiment of the disclosure, the cell selection operation referred to may be broadly understood to also include a cell reselection operation, but may not be limited thereto.

Next, in step S214, the terminal device 11 selects a serving base station from the reference base stations based on the signal indicator and the network congestion indicator corresponding to the each of the reference base stations.

In one embodiment, the terminal device 11 may find at least one candidate base station from the reference base stations based on the signal indicator corresponding to the each of the reference base stations. The signal indicator corresponding to each of the candidate base station satisfies a preset condition.

In one embodiment, for one of the reference base stations (hereinafter referred to as a first reference base station), the terminal device 11 may determine whether the signal strength corresponding to the first reference base station is not lower than a signal strength threshold (for example, 0dB ) and whether the signal quality corresponding to the first reference base station is not lower than a signal quality threshold (for example, 0dB) to determine whether the first reference base station belongs to the candidate base station.

In response to determining that the signal strength corresponding to the first reference base station is not lower than the signal strength threshold and the signal quality corresponding to the first reference base station is not lower than the signal quality threshold, the terminal device 11 may determine that the signal indicator corresponding to the first reference base station satisfies the preset condition. On the other hand, in response to determining that the signal strength corresponding to the first reference base station is lower than the signal strength threshold or the signal quality corresponding to the first reference base station is lower than the signal quality threshold, the terminal device 11 may determine the signal indicator corresponding to the first reference base station does not satisfy the preset condition, but may not be limited thereto.

In short, the terminal device 11 may find one or more of reference devices whose signal strength is not lower than the signal strength threshold and whose signal quality is not lower than the signal quality threshold as the candidate base station, but may not be limited thereto.

Afterwards, the terminal device 11 may select the serving base station from the candidate base station based on the network congestion indicator corresponding to the each of the candidate base station.

In one embodiment, the terminal device 11 may, for example, use one or more of the candidate base station with a highest user network throughput as the serving base station, but may not be limited thereto. For example, assuming that base station 12, in addition to satisfying the preset condition, is the candidate base station with the highest user network throughput, the terminal device 11 may, for example, select the base station 12 as the serving base station, but may not be limited thereto.

Afterwards, the terminal device 11 may correspondingly perform a subsequent connection procedure (such as a random access procedure) on the selected serving base station (such as the base station 12) to connect to the selected serving base station, but may not be limited thereto.

To sum up, the method proposed by the disclosure may allow the terminal device to select the base station with better signal strength, signal quality, and network congestion indicator (such as the highest user network throughput) as the serving base station, thereby avoiding selection of a more congested base station as a serving base station. This allows the terminal device to experience better data transfer speeds after the cell selection operation, thus improving the user experience.

**Claims**

1. A cell selection method adapted to a terminal device (11), **characterized in** comprising:

   during performing a cell selection operation on a plurality of reference base stations, obtaining (S212), by the terminal device (11), a signal indicator and a network congestion indicator corresponding to each of the reference base stations; and
   selecting (S214), by the terminal device (11), a serving base station from the reference base stations based on the signal indicator and the network congestion indicator corresponding to the each of the reference base stations.

**2.** The method according to claim 1, wherein the signal indicator corresponding to the each of the reference base stations comprises signal strength and signal quality, and the network congestion indicator corresponding to the each of the reference base stations comprises a user network throughput determined by the each of the reference base stations.

**3.** The method according to claim 2, wherein the user network throughput is a current user network throughput determined by a first reference base station.

**4.** The method according to claim 2, wherein the user network throughput is a future user network throughput predicted by a first reference base station.

**5.** The method according to claim 1, wherein selecting the serving base station from the reference base stations based on the signal indicator and the network congestion indicator corresponding to the each of the reference base stations comprises:

finding at least one candidate base station from the reference base stations based on the signal indicator corresponding to the each of the reference base stations, wherein the signal indicator corresponding to each of the candidate base station satisfies a preset condition;
selecting the serving base station from the at least one candidate base station based on the network congestion indicator corresponding to the each of the candidate base station.

**6.** The method according to claim 5, wherein the network congestion indicator corresponding to the each of the reference base stations comprises a user network throughput determined by the each of the reference base stations, and the serving base station has a highest user network throughput of the at least one candidate base station.

**7.** The method according to claim 5, wherein the reference base stations comprise a first reference base station, the signal indicator corresponding to the first reference base station comprises signal strength and signal quality, and the method further comprises:

in response to determining that the signal strength corresponding to the first reference base station is not lower than a signal strength threshold and the signal quality corresponding to the first reference base station is not lower than a signal quality threshold, determining that the signal indicator corresponding to the first reference base station satisfies the preset condition; and
in response to determining that the signal strength corresponding to the first reference base station is lower than the signal strength threshold or the signal quality corresponding to the first reference base station is lower than the signal quality threshold, determining that the signal indicator corresponding to the first reference base station does not satisfy the preset condition.

**8.** A cell selection method adapted to a base station (12), **characterized in** comprising:
providing (S222), by the base station (12), a signal indicator and a network congestion indicator corresponding to the base station to a terminal device (11), wherein the signal indicator and the network congestion indicator corresponding to the base station (12) allow the terminal device (11) to perform a cell selection operation.

**9.** The method according to claim 8, wherein the signal indicator corresponding to the base station (12) comprises signal strength and signal quality, and the network congestion indicator corresponding to the base station (12) comprises a user network throughput determined by the base station (12).

**10.** The method according to claim 9, wherein the user network throughput is a current user network throughput determined by the base station (12).

**11.** The method according to claim 9, wherein the user network throughput is a future user network throughput predicted by the base station (12).

**12.** The method according to claim 11, further comprising:
feeding at least one historical user network throughput into a predictive model, wherein the predictive model predicts the future user network throughput in response to the at least one historical user network throughput.

**13.** The method according to claim 12, wherein the predictive model comprises a long short-term memory model, and the future user network throughput is expressed as:

$$T'_{t+1} = f_\lambda(T_{t-L}, ..., T_t)$$

, where $T_{t-L}, ..., T_t$ is the at least one historical user network throughput, L is a time window, t is a time index, $f_\lambda(\cdot)$ is the long short-term memory model.

**14.** The method according to claim 12, wherein the predictive model comprises a regression model, and the future user network throughput is expressed as:

$$T'_{t+1} = c_t + \sum_{i=0}^{L} \varphi_i \, T_{t-i} + \varepsilon_t$$

, where $c_t$ is a random error value, $\varepsilon_t$ is a constant, $\varphi_i$ is a regression coefficient, $T_{t-L}$, ..., $T_t$ is the at least one historical user network throughput, L is a time window, and t is a time index.

**Amended claims in accordance with Rule 137(2) EPC.**

1. A cell selection method adapted to a terminal device (11), **characterized in** comprising:

   during performing a cell selection operation on a plurality of reference base stations, obtaining (S212), by the terminal device (11), a signal indicator and a network congestion indicator corresponding to each of the reference base stations; and
   selecting (S214), by the terminal device (11), a serving base station from the reference base stations based on the signal indicator and the network congestion indicator corresponding to the each of the reference base stations,
   wherein the terminal device (11) is in an inactive state, the terminal device (11) obtains information of one of intra-frequency cells, inter-frequency cells and inter-RAT cells from a current serving base station and performs the cell selection operation accordingly.

2. The method according to claim 1, wherein the signal indicator corresponding to the each of the reference base stations comprises signal strength and signal quality, and the network congestion indicator corresponding to the each of the reference base stations comprises a user network throughput determined by the each of the reference base stations.

3. The method according to claim 2, wherein the user network throughput is a current user network throughput determined by a first reference base station.

4. The method according to claim 2, wherein the user network throughput is a future user network throughput predicted by a first reference base station.

5. The method according to claim 1, wherein selecting the serving base station from the reference base stations based on the signal indicator and the network congestion indicator corresponding to the each of the reference base stations comprises:

   finding at least one candidate base station from the reference base stations based on the signal indicator corresponding to the each of the reference base stations, wherein the signal indicator corresponding to each of the candidate base station satisfies a preset condition;
   selecting the serving base station from the at least one candidate base station based on the network congestion indicator corresponding to the each of the candidate base station.

6. The method according to claim 5, wherein the network congestion indicator corresponding to the each of the reference base stations comprises a user network throughput determined by the each of the reference base stations, and the serving base station has a highest user network throughput of the at least one candidate base station.

7. The method according to claim 5, wherein the reference base stations comprise a first reference base station, the signal indicator corresponding to the first reference base station comprises signal strength and signal quality, and the method further comprises:

   in response to determining that the signal strength corresponding to the first reference base station is not lower than a signal strength threshold and the signal quality corresponding to the first reference base station is not lower than a signal quality threshold, determining that the signal indicator corresponding to the first reference base station satisfies the preset condition; and
   in response to determining that the signal strength corresponding to the first reference base station is lower than the signal strength threshold or the signal quality corresponding to the first reference base station is lower than the signal quality threshold, determining that the signal indicator corresponding to the first reference base station does not satisfy the preset condition.

8. A cell selection method adapted to a base station (12), **characterized in** comprising:

   providing (S222), by the base station (12), a signal indicator and a network congestion indicator corresponding to the base station to a terminal device (11), wherein the signal indicator and the network congestion indicator corresponding to the base station (12) allow the terminal device (11) to perform a cell selection operation,
   wherein the terminal device (11) is in an inactive state, the terminal device (11) obtains information of one of intra-frequency cells, inter-frequency cells and inter-RAT cells from a current serving base station and performs the cell selection operation accordingly.

9. The method according to claim 8, wherein the signal indicator corresponding to the base station (12) comprises signal strength and signal quality, and the network congestion indicator corresponding to the base station (12) comprises a user network throughput determined by the base station (12).

10. The method according to claim 9, wherein the user network throughput is a current user network throughput determined by the base station (12).

11. The method according to claim 9, wherein the user network throughput is a future user network throughput predicted by the base station (12).

12. The method according to claim 11, further comprising:
feeding at least one historical user network throughput into a predictive model, wherein the predictive model predicts the future user network throughput in response to the at least one historical user network throughput.

13. The method according to claim 12, wherein the predictive model comprises a long short-5 term memory model, and the future user network throughput is expressed as: $T_{t+1}' = f\lambda(T_{t-L},...,T_t)$
, where $T_{t-L},...,T_t$ is the at least one historical user network throughput, L is a time window, t is a time index, $f\lambda(\cdot)$ is the long short-term memory model.

14. The method according to claim 12, wherein the predictive model comprises a regression 10 model, and the future user network throughput is expressed as:
$T_{t+1}' = c_t + \sum \varphi_i L_{i=0} T_{t-i} + \varepsilon_t$
, where $c_t$ is a random error value, $\varepsilon_t$ is a constant, $\varphi_i$ is a regression coefficient, $T_{t-L},...,T_t$ is the at least one historical user network throughput, L is a time window, and t is a time index.

FIG. 1

terminal device /11

base station /12

S212

during performing a cell selection operation on multiple reference base stations, obtain a signal indicator and a network congestion indicator corresponding to each of the reference base stations

S222

provide a signal indicator and a network congestion indicator corresponding to the base station to the terminal device

S214

select a serving base station from the reference base stations based on the signal indicator and the network congestion indicator corresponding to the each of the reference base stations

FIG. 2

Europäisches
Patentamt

European
Patent Office

Office européen
des brevets

# EUROPEAN SEARCH REPORT

**Application Number**

EP 23 19 0194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/112182 A1 (LJUNG PETTER [SE]) 24 April 2014 (2014-04-24) | 1,5-8 | INV. H04W48/20 |
| Y | * paragraphs [0030], [0031]; figure 7 * | 2-4,9,10 | |
| Y | US 2006/140117 A1 (AERRABOTU NAVEEN [US] ET AL) 29 June 2006 (2006-06-29) * paragraph [0070] * * paragraph [0053] - paragraph [0057]; figure 5 * * paragraph [0039] * | 2-4,9-14 | |
| Y | US 2015/208280 A1 (LORCA HERNANDO JAVIER [ES]) 23 July 2015 (2015-07-23) * paragraph [0118] - paragraph [0131]; figure 7 * | 2-4,9,10 | |
| A | Ahmadi Sassan: "CHAPTER 4 system Operation and UE States", LTE-Advanced : A Practical Systems Approach to Understanding 3GPP LTE Releases 10 and 11 Radio Access Technologies, 1 January 2013 (2013-01-01), pages 166-168, XP093121631, Retrieved from the Internet: URL:https://ebookcentral.proquest.com/lib/ epo-ebooks/detail.action?docID=1495648 [retrieved on 2024-01-19] * page 166 * | 1-10 | |
| | | | TECHNICAL FIELDS SEARCHED (IPC) |
| | | | H04W |
| Y | EP 3 818 750 B1 (SAMSUNG ELECTRONICS CO LTD [KR]) 31 August 2022 (2022-08-31) * paragraph [0072] - paragraph [0080]; figure 1E * | 11-14 | |

-/--

The present search report has been drawn up for all claims

| Place of search | Date of completion of the search | Examiner |
|---|---|---|
| Munich | 8 April 2024 | Cremer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HUA YUXIU ET AL: "Deep Learning with Long Short-Term Memory for Time Series Prediction", IEEE COMMUNICATIONS MAGAZINE, IEEE SERVICE CENTER, PISCATAWAY, US, vol. 57, no. 6, 1 June 2019 (2019-06-01), pages 114-119, XP011730533, ISSN: 0163-6804, DOI: 10.1109/MCOM.2019.1800155 [retrieved on 2019-06-18] * page 114 - page 115; figure 1 * ----- | 12,13 | |
| A | SCHMID JOSEF ET AL: "A Deep Learning Approach for Location Independent Throughput Prediction", 2019 IEEE INTERNATIONAL CONFERENCE ON CONNECTED VEHICLES AND EXPO (ICCVE), IEEE, 4 November 2019 (2019-11-04), pages 1-5, XP033692854, DOI: 10.1109/ICCVE45908.2019.8965216 [retrieved on 2020-01-21] * abstract * ----- | 12,13 | |
| Y | Ahmad Anirah ET AL: "THE ENHANCEMENT OF LINEAR REGRESSION ALGORITHM IN HANDLING MISSING DATA FOR MEDICAL DATA SET", ARPN Journal of Engineering and Applied Sciences, 1 November 2016 (2016-11-01), pages 13160-13168, XP093148925, Retrieved from the Internet: URL:http://www.arpnjournals.org/jeas/research_papers/rp_2016/jeas_1116_5363.pdf [retrieved on 2024-04-08] * Linear Regression *; page 13162 - page 13163 ----- | 14 | TECHNICAL FIELDS SEARCHED (IPC) |

The present search report has been drawn up for all claims

| Place of search | Date of completion of the search | Examiner |
|---|---|---|
| Munich | 8 April 2024 | Cremer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 23 19 0194**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

    **1. claims: 1-10**

        **Terminal-executed method for performing cell selection based on signal quality and throughput**
            ---

    **2. claims: 11-14**

        **Base station-executed method for predicting throughput**
            ---

## ANNEX TO THE EUROPEAN SEARCH REPORT
## ON EUROPEAN PATENT APPLICATION NO.

EP 23 19 0194

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | | Publication date | Patent family member(s) | | Publication date |
|---|---|---|---|---|---|
| US 2014112182 | A1 | 24-04-2014 | EP | 2727405 A1 | 07-05-2014 |
| | | | US | 2014112182 A1 | 24-04-2014 |
| | | | WO | 2013002689 A1 | 03-01-2013 |
| US 2006140117 | A1 | 29-06-2006 | JP | 2006191625 A | 20-07-2006 |
| | | | TW | 200642497 A | 01-12-2006 |
| | | | US | 2006140117 A1 | 29-06-2006 |
| | | | WO | 2006071396 A1 | 06-07-2006 |
| US 2015208280 | A1 | 23-07-2015 | EP | 2878153 A1 | 03-06-2015 |
| | | | ES | 2440170 A2 | 27-01-2014 |
| | | | ES | 2638546 T3 | 23-10-2017 |
| | | | US | 2015208280 A1 | 23-07-2015 |
| | | | WO | 2014016280 A1 | 30-01-2014 |
| EP 3818750 | B1 | 31-08-2022 | CN | 112740753 A | 30-04-2021 |
| | | | EP | 3818750 A1 | 12-05-2021 |
| | | | KR | 20200015339 A | 12-02-2020 |

EPO FORM P0459

For more details about this annex : see Official Journal of the European Patent Office, No. 12/82